# FASCICULE DE BREVET EUROPEEN

(11) **EP 0 589 734 B1**
(45) Date de publication et mention de la délivrance du brevet: **20.01.1999**
(21) Numéro de dépôt: 93402087.6
(22) Date de dépôt: 24.08.1993
(51) Int. Cl.: H04L 12/18, H04L 29/06, H04L 12/28

(54) **Procédé d'échange d'informations, en particulier entre équipements d'un local, et unité fonctionnelle et installation s'y rapportant**
Verfahren und Anordnung zum Informationsaustausch zwischen Endstellen eines Haus-Netzwerkes
Method and arrangement for the excharge of information between home network terminals

(30) Priorité: 26.08.1992 FR 9210287
(43) Date de publication de la demande: 30.03.1994
(73) Titulaire: EURO CP s.a.r.l., 94300 Vincennes (FR)
(72) Inventeur: Gilbert, Jérôme, F-92300 Levallois Perret (FR)
(74) Mandataire: Pontet, Bernard

(56) Documents cités:
- EP-A- 0 321 203
- IEEE TRANSACTIONS ON BROADCAST AND TV RECEIVERS vol. 31, no. 3 , Aoüt 1985 , NEW YORK US pages 516 - 525 M. INOUE ET AL. 'A HOME AUTOMATION SYSTEM'

## Description

La présente invention concerne un procédé d'échange d'informations entre des unités fonctionnelles telles que des équipements d'un local d'habitation ou professionnel.

La présente invention concerne également une unité fonctionnelle pour la mise en oeuvre de ce procédé.

La présente invention concerne encore une installation incluant de telles unités fonctionnelles.

La présente invention concerne les installations, par exemple domestiques, de bureau ou de locaux professionnels, dans lesquelles des unités fonctionnelles, telles que des appareils électroménagers, des appareils de chauffage, d'éclairage, audio-vidéo, volet roulant, alarme, appareils professionnels etc, réunies en un ou plusieurs réseaux par un espace de communication à travers lequel ces unités peuvent communiquer, notamment de manière bidirectionnelle, par exemple pour émettre et recevoir des messages d'état et de commande.

En pratique, l'espace de communication peut être concrétisé par le réseau d'alimentation électrique, auquel cas les messages sont transmis par la méthode dite des courants porteurs. Mais l'espace de communication peut également être du type perméable aux ondes radio, aux ondes infra-rouges, ou du type moyen filaire, etc. D'autres concrétisations sont également envisageables.

Dans une installation du genre évoqué ci-dessus, il y a grand intérêt à ce que les messages soient aussi brefs que possible et traités aussi rapidement que possible par les unités fonctionnelles destinataires.

Dans certains cas, un message déterminé doit être pris en compte par une seule unité fonctionnelle et être ignoré de toutes les autres, ou encore pris en compte par un groupe plus ou moins grand d'unités fonctionnelles et ignoré des autres, ou encore être pris en compte par l'ensemble des unités fonctionnelles.

Chaque unité fonctionnelle peut avoir une adresse et il est dans ce cas possible de lui envoyer un message à son adresse, de façon qu'elle soit seule à prendre en compte ce message. Le problème qui se pose alors est qu'un message s'adressant à un grand nombre d'unités fonctionnelles devra être réitéré pour chaque unité fonctionnelle avec son adresse spécifique. Le temps de transmission devient alors extrêmement important.

Le EP-A-0 321 203 décrit deux versions d'un procédé d'échange d'informations. Selon une première version, l'adresse dont est muni le message est un nombre à seize bits (donc trois caractères hexadécimaux, de 000(HEX) à FFF(HEX)) qui est composé de quatre champs, à savoir numéro d'unité, type d'unité, code de service, ainsi qu'un bit qui est égal à 0 si le message est individuel, c'est à dire destiné à une seule unité, et à 1 si au contraire le message est collectif.

Chaque unité a plusieurs adresses à seize bits correspondant respectivement à l'adresse que devront avoir les messages individuels destinés à cette unité, les messages destinés à toutes les unités de ce type de dispositif, les messages destinés à toutes les unités du service, et les messages destinés à toutes les unités. Lorsqu'un message est reçu, il est successivement comparé aux adresses locales jusqu'à épuisement des quatre adresses locales ou jusqu'à ce que soit relevée l'identité entre l'adresse transmise et l'une des adresses locales.

Autrement dit cet art antérieur permet l'émission et la réception de messages collectifs, mais au prix d'un temps de traitement accru en ce qui concerne la détection de concordance. Si l'on voulait multiplier le nombre des sous-groupes différents auxquels une même unité peut appartenir, il faudrait multiplier les adresses locales et multiplier les étapes de recherche de concordance chaque fois qu'un message est reçu, surtout si les sous-groupes n'étaient pas strictement inclus les uns dans les autres.

Selon une deuxième version du procédé selon le EP-A-0 321 203, lorsque le message est destiné à toutes les unités, un code à un octet est ajouté dans les données. Chaque bit de cet octet représente un groupe d'unités, et seules les unités appartenant à un groupe dont le bit est égal à 1 dans l'adresse transmise vont finalement prendre en compte le message. L'encombrement du message est donc accru de 1 bit par groupe d'unités. Malgré cela, la souplesse obtenue est très réduite : si le groupe des appareils de chauffage est visé, rien ne permet de limiter la réception du message aux appareils de chauffage situés dans le séjour, sauf si on crée un groupe spécial pour ceux-ci.

Le but de l'invention est de remédier à ces inconvénients en proposant un procédé d'échange d'information qui soit rapide, et économe en place aussi bien dans les messages que dans les mémoires des unités même si les critères de prise en compte du message sont nombreux et/ou indépendants les uns des autres.

Suivant l'invention, le procédé d'échange d'informations entre des unités fonctionnelles, en particulier dans des locaux domestiques ou professionnels, communiquant entre elles à travers un espace de communication, dans lequel chaque message émis à partir d'une des unités contient une adresse à laquelle est associée au moins un code relatif au mode de recherche de concordance, et certaines au moins des autres unités, ayant chacune au moins une adresse locale à composantes multiples constituant des éléments de définition de l'unité et/ou de sa situation, recherchent s'il y a une concordance convenable entre l'adresse du message et leur adresse locale et prennent en compte le message en cas de concordance, est caractérisé en ce que lesdites autres unités utilisent le code comme un code de sélection de critères pour déterminer quelle(s) composante(s) de leur adresse locale et composante(s) correspondantes de l'adresse du message doivent être comparées pour rechercher la concordance, et respectivement doi(ven)t être laissée(s) hors comparaison, de façon que le message soit pris en compte par les unités d'une famille cible correspondant à l'intersection des ensembles d'unités définis par les composantes prises en compte dans l'adresse du message.

Ainsi, suivant l'invention, au moins un code de sélection de critères fait que la concordance entre l'adresse du message et l'adresse locale ne sera vérifiée que pour les composantes d'adresse qui sont discriminantes pour la décision de prendre en compte ou non un message reçu. Par exemple, si un message est destiné à tous les appareils de chauffage, la concordance sur la composante d'adresse spécifiant le type d'appareil sera vérifiée pour que l'unité ne prenne en compte le message que si elle est un appareil de chauffage, mais la concordance sur la composante de type précis d'appareil ne sera pas vérifiée, ni la concordance sur l'adresse générale de pièce et l'adresse précise de pièce etc.

On peut ainsi multiplier les composantes d'adresse définissant l'unité et combiner de toutes les façons possibles les critères correspondants de prise en compte du message sans compliquer grandement la décision de prendre en compte ou non un message reçu et en n'augmentant que de manière proportionnelle l'encombrement en mémoire et dans les messages et le temps de traitement.

Le code de sélection de critères peut être un code qui va régir l'ensemble du processus de comparaison, ou un code tel qu'une valeur particulière attribuée à une composante de l'adresse transmise, pour provoquer un contournement du test sur la concordance entre cette composante de l'adresse transmise et la composante correspondante de l'adresse locale.

Ainsi, on peut donner à chaque unité fonctionnelle une adresse très élaborée, dont les composantes définissent par exemple des groupes et des sous-groupes au sein d'une même famille d'unités. Il est encore possible, au moyen de deux composantes d'adresse différentes, de faire appartenir l'unité fonctionnelle à deux familles qui correspondent à des critères de classification différents, sans qu'aucune des deux familles ne soit complètement incluse dans l'autre. L'une des composantes d'adresse peut par exemple signifier que l'unité fonctionnelle est un appareil de chauffage, et une autre composante d'adresse peut préciser la situation géographique de l'unité fonctionnelle, par exemple la localisation dans une chambre à coucher.

Grâce au code de sélection de critères inclus dans chaque message, chaque unité fonctionnelle recevant un message sait quels tests de concordance doivent être effectués pour déterminer si le message lui est destiné. Par exemple, si le message est destiné à tous les appareils capables de le recevoir, le code de sélection de critères pourra indiquer qu'aucun test de concordance ne doit être effectué. Dans de nombreuses situations intermédiaires, le code de sélection de critères pourra prescrire d'effectuer par exemple les tests sur le type d'appareil et sur une forme de localisation, par exemple "pièces humides" par opposition à "pièces sèches" en omettant le test sur une autre forme de localisation, par exemple pièces nocturnes ou diurnes. De cette façon, seuls des appareils d'un certain type localisés d'une certaine manière dans l'installation prendront en compte le message. D'autres combinaisons sont encore envisageables.

On peut ainsi faire varier très librement la composition de la famille cible des unités fonctionnelles qui prendra en compte un message déterminé tout en n'émettant le message qu'une seule fois ou en tout cas qu'un petit nombre de fois. De plus, la composition d'une adresse associée à un message émis peut être simplifiée lorsque le code de sélection de critères associé à cette adresse indique qu'une composante d'adresse déterminée ne fera l'objet d'aucun test de concordance. Selon une particularité optionnelle de l'invention, on peut même, dans ce cas, utiliser le champ d'adresse inutile pour transférer d'autres informations telles que, par exemple, la composante d'adresse correspondante du dispositif émetteur.

En outre, l'invention procure une grande rapidité d'exécution des tests de concordance. Malgré le caractère détaillé des adresses des unités fonctionnelles, on ne teste en général qu'un nombre limité des composantes d'adressage, et ceci réduit en outre le risque d'erreur.

Selon un mode de mise en oeuvre préféré du procédé selon l'invention, un code de sélection de critères peut consister en une valeur particulière d'un champ d'adressage. Lorsque le champ d'adressage a cette valeur particulière dans le message émis, les unités fonctionnelles recevant le message prennent en ce qui concerne cette composante d'adresse une décision de concordance sans effectuer le test correspondant. On réalise ainsi un code de sélection de critères qui ne prend pas de place dans l'adresse des messages émis.

On peut également prévoir un code de sélection de critères occupant un champ d'adressage déterminé dans l'adresse du message émis. Dans ce cas, chaque unité fonctionnelle recevant le message détecte ce code de sélection de critères et effectue des successions de tests différentes selon la valeur logique du code de sélection de test. On gagne ainsi du temps de traitement.

Selon un deuxième aspect de l'invention, l'unité fonctionnelle pour la mise en oeuvre du procédé selon le premier aspect, comprenant des moyens pour être reliée à un espace de communication et des moyens pour rechercher une concordance entre une adresse des messages reçus et au moins une adresse locale de cette unité, ces adresses comprenant des composantes constituant des éléments de définition de l'unité concernée et de sa situation, est caractérisée en ce que les moyens pour rechercher une concordance comprennent des moyens pour détecter dans le message reçu un code de sélection de critères et pour sélectionner d'après ce code un mode de recherche de concordance parmi plusieurs modes de recherche possibles se distinguant par le choix des composantes sur lesquelles porte la recherche de concordance et de celle(s) qui, au moins pour une valeur du code de sélection de critères, est (sont) écartée(s) de la recherche de concordance, de manière que l'unité ne prenne en compte chaque message que lorsqu'elle appartient à une famille-cible correspondant à l'intersection des ensembles d'unités définis par les composantes de l'adresse du message sur lesquelles a porté la recherche de correspondance.

Selon un troisième aspect de l'invention, l'installation comprenant des unités fonctionnelles reliées entre elles par un espace de communication est caractérisée en ce que certaines au moins des unités fonctionnelles sont conformes au second aspect de l'invention.

D'autres particularités et avantages de l'invention ressortiront encore de la description ci-après, relative à des exemples non limitatifs.

Aux dessins annexés :
- La figure 1 est une vue schématique d'une installation selon l'invention ;
- La figure 2 est un schéma-bloc d'une unité fonctionnelle selon l'invention ;
- La figure 3 est un schéma d'un message émis à travers l'espace de communication ;
- La figure 4 est une représentation schématique d'une adresse d'une unité fonctionnelle ;
- La figure 5 est un organigramme simplifié de recherche de concordance dans une unité fonctionnelle recevant un message ; et
- La figure 6 est une vue plus détaillée du test de concordance multi-critères de la figure 5.

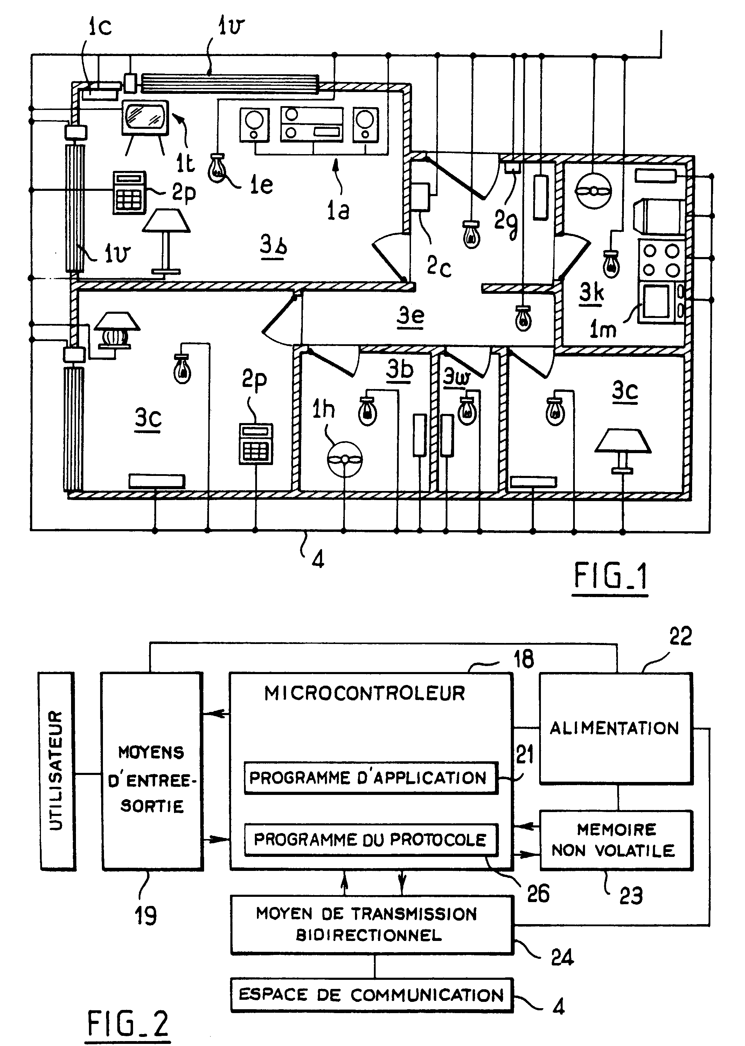

Dans l'exemple représenté à la figure 1, l'installation domestique comprend des appareils d'éclairage le, des appareils de chauffage 1c, une chaîne audio 1a, un téléviseur lt, des volets roulants motorisés 1v, des hottes aspirantes 1h, des appareils électroménagers 1m, qui sont essentiellement des appareils d'action. L'installation comprend en outre des appareils de commande et régulation, à savoir des claviers de programmation 2p, un appareil de régulation de chauffage 2c, et un interrupteur de coupure générale 2g. D'autres types d'appareils d'action et/ou de contrôle et régulation pourraient être prévus. Ces unités sont réparties dans diverses pièces d'un appartement, à savoir un séjour 3s, une grande chambre 3C, une petite chambre 3c, une entrée 3e, une cuisine 3k, une salle de bains 3b et des toilettes 3w.

Les unités fonctionnelles d'action, que l'on désignera globalement par la référence "1", et les unités fonctionnelles de commande et régulation, que l'on désignera globalement par la référence "2", sont toutes reliées les unes aux autres par un espace de communication bidirectionnel 4 à travers lequel elles peuvent échanger notamment des messages d'état provenant des unités d'action 1 et des messages de commande destinés aux unités d'action 1.

L'espace 4 peut être constitué par le réseau d'alimentation électrique, auquel cas les messages sont élaborés de manière concrète selon la technique des courants porteurs. L'espace peut également être constitué par des moyens filaires, ou un espace perméable aux ondes radio ou aux signaux infra-rouges.

Comme représenté à la figure 2, chaque unité d'action comporte un micro-contrôleur 18 relié à des moyens d'entrée/sortie 19 qui font l'interface avec l'utilisateur. En pratique, ces moyens d'entrée/sortie sont constitués par les boutons de commande et voyants lumineux de l'appareil, et aussi par les actionneurs de l'appareil d'action, qui fournissent à l'utilisateur l'action attendue, par exemple éclairage, chauffage etc.

En fonction des commandes effectuées sur les boutons, et le cas échéant des signaux reçus de capteurs, un programme d'application 21 prévu dans le micro-contrôleur gère l'action des voyants lumineux et des actionneurs (lampes, moteurs, résistances chauffantes, relais, etc) faisant partie des moyens d'entrée/sortie. Le micro-contrôleur 18 est en outre relié à une alimentation 22 et à une mémoire non-volatile 23. Le micro-contrôleur 18 est aussi relié à l'espace 4 par l'intermédiaire d'un moyen de transmission bidirectionnel 24, par exemple un moyen capable de transformer en message du type courants porteurs les informations reçues du micro-contrôleur 18, et inversement de transformer en signaux acceptables par le micro-contrôleur 18 les messages du type courants porteurs provenant de l'espace 4.

Le micro-contrôleur 18 renferme encore un programme de protocole 26 qui gère les échanges d'informations entre le moyen de transmission bidirectionnel 24, les moyens d'entrée/sortie 19 et la mémoire non-volatile 23.

Il importe que les messages de commande envoyés par les appareils de commande 2 atteignent toutes les unités action 1 concernées, et ne soient pas pris en compte par les unités d'action non concernées. Par exemple, les ordres élaborés par le régulateur de chauffage 2c ne doivent être pris en compte que par les appareils de chauffage lc et même, dans certains cas, que par certains appareils de chauffage 1c et non par d'autres. Certains ordres peuvent par exemple être destinés aux chambres à coucher 3c et d'autres aux pièces d'habitation diurne, à savoir toutes les pièces 3b, 3e, 3k, 3s, 3w autres que les chambres à coucher. Les ordres ont donc pour cible l'intersection entre deux ensembles, à savoir l'ensemble des appareils de chauffage et l'ensemble des appareils électriques des chambres à coucher par exemple.

Dans d'autres cas au contraire, notamment le cas de l'interrupteur général 2g, toutes les unités d'action 1 doivent prendre en compte les ordres de coupure ou de rétablissement. En ce qui concerne les programmateurs 2p, les commandes qu'ils émettent sont en principe destinées à un appareil bien déterminé que le programmateur connaît grâce à un processus préalable de configuration du réseau, par exemple tel que le processus de mise en correspondance décrit dans le FR-A-2670590

D'autres situations sont encore possibles. Par exemple, on peut délimiter dans l'appartement plusieurs zones, par exemple une zone jour et une zone nuit pour lesquelles le chauffage doit fonctionner selon des cycles horaires différents et il faut alors que les commandes émises par le régulateur 2c puissent être destinées soit à la zone jour soit à la zone nuit. Dans des locaux plus grands que ceux représentés, par exemple des locaux professionnels, on peut réaliser un niveau de subdivision plus large, que l'on appellera arbitrairement "réseau". En d'autres termes, on pourrait avoir deux réseaux subdivisés l'un en deux zones et l'autre en trois zones. Ceci n'empêche pas que l'on puisse souhaiter réguler de la même manière toutes les zones d'un certain type, par exemple les zones nuit, indépendamment de leur appartenance à un réseau déterminé.

On définit encore des "groupes" d'unités fonctionnelles que l'on souhaite pouvoir commander toutes ensembles, par exemple un certain nombre de points d'éclairage.

On va maintenant exposer comment, selon l'invention, un adressage aussi complexe peut être réalisé de manière extrêmement économique en temps de transmission et en temps de traitement.

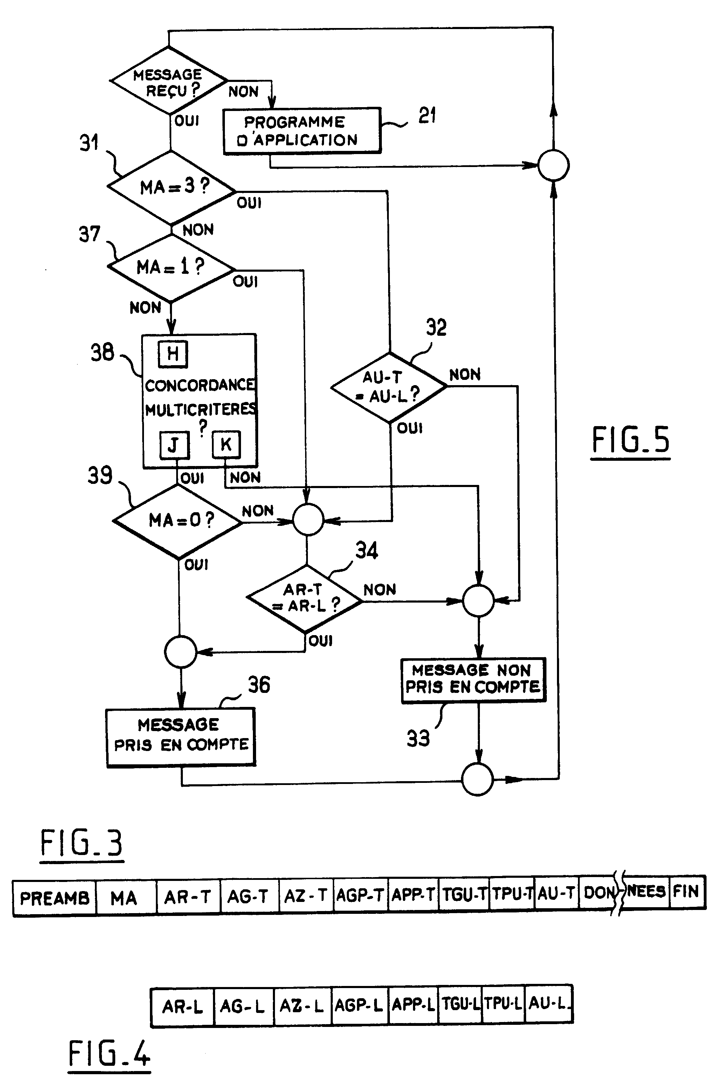

On a représenté à la figure 3 un exemple de composition d'un message transitant à travers l'espace de communication 4. Le message comprend un champ d'adresse "PREAMB", qui est sans rapport direct avec l'invention et permet certains réglages automatiques de transmission et réception. Le champ PREAMB est suivi par un champ de mode d'adressage MA qui dans l'exemple que l'on va décrire en détail correspond à deux bits de manière à pouvoir prendre les niveaux logiques 0, 1, 2, ou 3. Et cette valeur va constituer un code de sélection de critères de concordance d'adresse pour les unités recevant le message, d'une manière qui sera décrite plus loin.

Les huit champs d'adresse qui suivent sont désignés chacun par une succession de lettres terminée par le suffixe **"-T"** pour rappeler qu'il s'agit de composantes d'adresse transmises et les distinguer ainsi des composantes d'adresse locales, désignées avec le suffixe **"-L"**, des unités fonctionnelles recevant le message.

Le message transmis représenté à la figure 3 comprend ainsi, dans l'exemple, un champ AR-T pour une composante d'adresse de réseau, un champ AG-T pour une composante d'adresse de groupe, un champ AZ-T pour une composante d'adresse de zone, un champ AGP-T pour une composante d'adresse générale de pièce, un champ APP-T pour une composante d'adresse précise de pièce, un champ TGU-T pour une composante d'adresse indicative du type général d'unité, un champ TPU-T pour une composante d'adresse indicative du type particulier d'unité, et un champ AU-T pour une composante d'adresse d'unité.

La composante d'adresse générale de pièce AGP-T signifie par exemple "chambre", "pièces de séjour et de loisirs", "pièces sanitaires", etc.

La composante d'adresse précise de pièce APP-T désigne chaque pièce séparement.

La composante de type général d'unité TGU-T signifie par exemple "appareil de chauffage", ou encore "gros électroménager" etc...

La composante de type précis d'unité TPU-T désigne plus précisément le type d'unité, par exemple "appareil de chauffage radiant" et "appareil de chauffage soufflant", ou encore "lave-vaisselle" et "sèche-linge", etc...

Enfin la composante d'adresse d'unité AU-T est par exemple un numéro arbitraire qui est affecté à une et une seule unité de l'installation.

Après l'adresse constituée de tous les champs d'adresse qui viennent d'être décrits, le message comprend des données puis des caractères signalisant la fin du message.

La figure 4 représente les champs d'adressage local dans la mémoire non-volatile 23 (figure 2) d'une unité fonctionnelle. Pour faciliter la comparaison avec le message schématisé à la figure 3, on a disposé les champs d'adressage local de manière correspondante. On voit que les champs d'adressage locaux AR-L, AG-L, AZ-L, AGP-L, APP-L, TGU-L, TPU-L, et AU-L correspondent ainsi aux huit champs d'adresse avec suffixe "-T" du message. On affecte ainsi à chaque unité une composante d'adresse de réseau, une composante d'adresse de groupe, une composante d'adresse de zone, des composantes d'adresses générale et précise de pièces, des composantes de type général et précis d'unité, et une composante d'adresse d'unité.

La figure 5 illustre le logiciel de traitement d'un message reçu dans une unité. Un test 31 détermine si le mode d'adressage MA est égal à 3. Si oui, c'est que le message est destiné à une unité bien déterminée, et la recherche de concordance d'adresse consiste à déterminer par un test 32 si l'adresse d'unité transmise correspond à l'adresse d'unité locale. Dans la négative, une décision 33 de non concordance d'adresse et de non-considération du message est prise. Au contraire, s'il y a concordance des adresses d'unité, on vérifie encore la concordance entre adresses de réseau par un test 34. Ceci correspond au fait que dans l'exemple représenté, lors de l'attribution des adresses d'unité, on a admis que deux unités appartenant à des réseaux différents puissent avoir des adresses d'unité identiques. Si le test 34 démontre qu'il y a concordance entre les adresses de réseau, on est conduit à une décision 36 de prise en compte du message. Dans le cas contraire on est renvoyé à la décision 33 de non prise en compte du message.

Si le code de mode d'adressage est égal à 1, cela est détecté par un test 37 dont l'entrée correspond à la sortie négative du test 31, et dans ce cas, seul le test 34 est mis en oeuvre pour décider si le message doit ou non être pris en compte. Autrement dit, le code MA = 1 signifie que le message doit être pris en compte par toutes les unités d'un réseau déterminé.

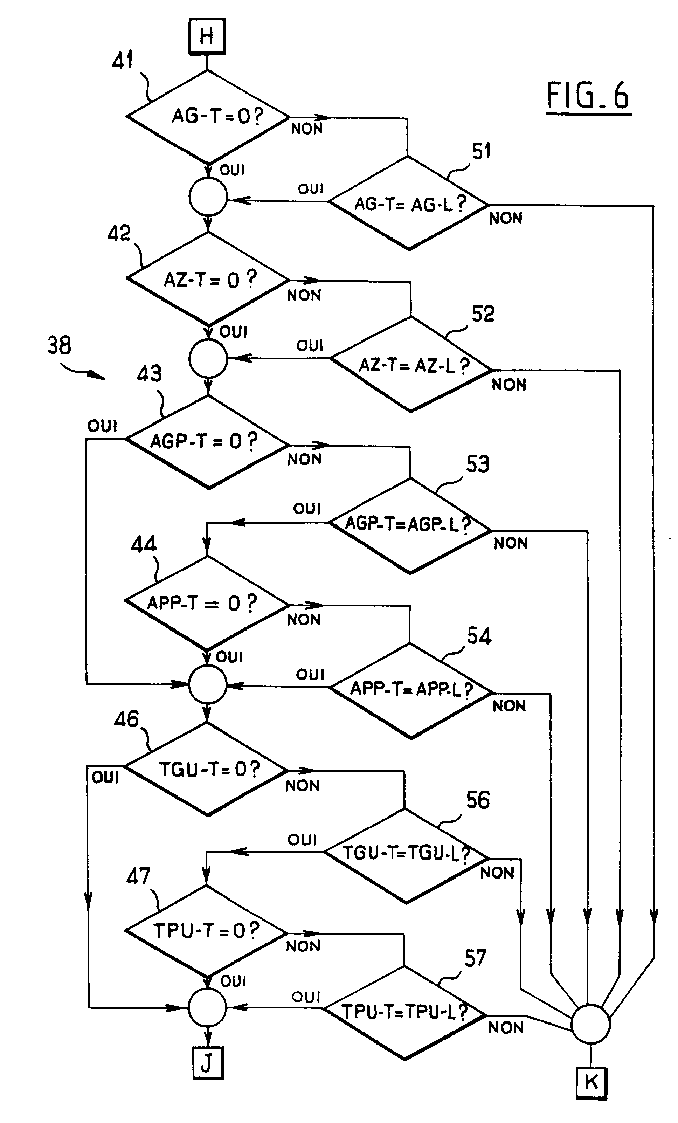

Si le test 37 donne un résultat négatif, autrement dit si MA = 0 ou 2, la recherche de concordance passe par un test de concordance multi-critères 38 qui sera décrit en détail en référence à la figure 6. Si ce test donne un résultat négatif (sortie K), le message n'est pas pris en compte (décision 33) et s'il est positif (sortie J), on recherche par un test 39 si le code de mode d'adressage MA est égal à 0. Dans l'affirmative, on est envoyé à la décision 36 de prise en compte du message, autrement dit toutes les unités ayant satisfait au test 38 de concordance multi-critères, quel que soit le réseau auquel elles appartiennent, prennent en compte le message.

Le code MA = 0 n'est utilisé qu'exceptionnellement, car il permet à un réseau de perturber le réseau voisin, par exemple l'installation d'un appartement voisin. Il est néanmoins utile à des fins de gestion de réseau, et en particulier pendant la phase de configuration initiale du réseau.

Si au contraire la réponse au test 39 est négative, autrement dit si MA = 2, on est envoyé au test 34 de concordance d'adresse de réseau et par conséquent seules les unités ayant satisfait au test de concordance multi-critères et appartenant à un réseau déterminé prendront en compte le message.

On voit donc qu'en fonction du code de mode d'adressage MA, la recherche de concordance d'adresse est traitée de manière différente par les unités recevant le message.

A la figure 6, on a désigné par "H" l'entrée du test de concordance multi-critères 38 et par "J" et "K" ses sorties positive et respectivement négative, comme à la figure 5. Le test de concordance multi-critères 38 comprend une cascade de tests de zéro 41, 42, 43, 44, 46 et 47 pour déterminer si les composantes d'adresse AG-T, AZ-T, AGP-T, APP-T, TGU-T, TPU-T sont ou non égales à 0. De plus, la sortie négative (composante d'adresse différente de zéro) de chacun de ces tests est reliée à l'entrée d'un test de concordance respectif 51, 52, 53, 54, 56, 57 pour déterminer si la composante d'adresse transmise concorde avec la composante d'adresse locale correspondante. En cas de concordance, on est envoyé à l'entrée du test de zéro suivant. Lorsqu'une des composantes d'adressage est égale à 0 dans le message transmis, cela signifie que la décision de prendre en compte le message doit être prise par l'unité réceptrice indépendamment de la composante d'adresse qui a la valeur "0" dans le message transmis. Autrement dit, quand une composante d'adresse a la valeur "0", on fait comme si le test de concordance sur cette composante d'adresse avait donné un résultat positif. On est donc envoyé directement en aval de la sortie positive du test de concordance correspondant c'est à dire à l'entrée d'un test de zéro suivant ou à la sortie positive J du test de concordance multi-critères. On voit par conséquent que si toutes les composantes d'adresse faisant l'objet des tests 41 à 44, 46 et 47 ont la valeur 0 dans le message transmis, et qu'en outre le code de mode d'adressage AM est égal à 0, toutes les unités recevant le message devront le prendre en compte.

De plus, si le test de zéro 46 portant sur le type général d'unités indique que la composante d'adresse correspondante a la valeur 0 dans le message transmis, non seulement le test de concordance avec la composante locale correspondante n'est pas effectué mais en outre le test suivant sur l'éventuelle valeur 0 de la composante de type précis d'unité TPU-T (test 47) est court-circuité, pour simplifier le traitement. En effet, par exemple, si un message vise tous types d'unités, c'est à dire aussi bien les appareils d'éclairage que de chauffage, il ne peut pas être destiné à un type d'appareil de chauffage particulier.

Des considérations similaires ont conduit à relier directement la sortie positive du test de zéro 43 sur l'adresse générale de pièce AGP-T à la sortie positive du test 54 de concordance sur l'adresse précise de pièce APP-T.

Ainsi, une adresse précise de pièce APP-T ou un type précis d'unité TPU-T ne peuvent être pris en compte que si une concordance a été effectivement détectée sur l'adresse générale de pièce AGP-T ou respectivement sur le type général d'unité TGU-T.

En d'autres termes, en référence aux adresses générales et précises de pièces, on a classé les cibles, c'est à dire les unités susceptibles de recevoir les messages, en plusieurs ensembles d'après le type général de la pièce à laquelle ces cibles appartiennent. De plus dans chaque ensemble, on a défini plusieurs sous-ensembles également disjoints d'après la pièce à laquelle les cibles appartiennent. Quand un message vise tout un ensemble, seule l'adresse générale de pièce est mentionnée dans le message, et l'adresse précise de pièce est égale à zéro. Si le message ne vise que les cibles d'une pièce, le message comporte l'adresse générale de pièce AGP-T et l'adresse prècise de pièce APP-T. Ainsi, on peut avoir dans deux ensembles différents deux pièces ayant même adresse précise de pièce APP-L sans qu'il en résulte de risque de prise en compte inappropriée d'un message. Ceci permet de raccourcir les adresses précises de pièce. Ce qui précède s'applique de manière semblable aux composantes d'adresse sur le type général d'unité et le type précis d'unité.

Pour chaque test 41 à 44, 46 et 47 qui indique qu'une composante d'adresse est différente de 0 dans le message, alors chaque test correspondant 51 à 54, 56, 57 détermine s'il y a ou non concordance entre la composante d'adresse du message et la composante d'adresse locale correspondante. Dans la négative, on arrive directement à la sortie K du test de concordance multi-critères 38, conduisant à la décision 33 de non-prise en compte du message.

Si au contraire il y a concordance entre la composante transmise et la composante locale, on passe au test de zéro 41 à 44, 46 et 47 qui porte sur la composante d'adresse suivante à moins que, si tous les tests 41 à 44, 46, 47 ont déjà été effectués ou court-circuités (cas du test 57 sur la concordance sur le type précis d'unité), on passe directement à la sortie J menant à la décision 36 de prise en compte du message après passage éventuel par le test 34 (figure 5).

Ainsi, le code de mode d'adressage MA ainsi que la valeur 0 éventuelle de chaque champ d'adressage constituent ensemble un code de sélection de critères qui, détecté par chaque unité recevant le message, détermine les tests de concordance que l'unité doit effectuer.

Il pourra être intéressant dans certains cas de donner la valeur 0 à une composante d'adresse locale faisant partie des composantes testées dans le test de concordance multi-critères 38. Une telle unité ne pourra prendre en compte que des messages dont la composante d'adresse correspondante a la valeur conventionnelle 0 produisant un court-circuitage du test de concordance relatif à cette composante. On peut prévoir que chaque unité reçoit en usine une adresse d'attente avec toutes les composantes égales à 0. Ainsi une unité qui n'a pas encore été configurée ne risque pas de prendre en compte des messages destinés à des familles d'unités déterminées. De même, on peut rendre sourde une unité initiallement configurée. Pour cela, on met toutes ses composantes à 0.

Comme l'unité émettrice connaît le code de mode d'adressage MA du message qu'elle émet, elle sait quelles seront les composantes d'adressage qui feront l'objet d'un test de concordance dans les unités réceptrices. Elle peut donc loger des informations dans les champs d'adresse correspondant à des composantes qui ne seront pas testées. Ces informations peuvent par exemple consister en des composantes d'adresse de l'unité émettrice. Les unités réceptrices peuvent être programmées pour en fonction du code de mode d'adressage MA, lire et interpréter convenablement les champs correspondant à des composantes qui ne font pas l'objet de test.

Pour l'émission des messages convenablement codés en vue de la sélection des critères de concordance, on a souvent recours à une programmation spécifique de chaque type d'unité susceptible d'être émettrice. Par exemple, le régulateur de chauffage 2c de la figure 1 est programmé pour émettre systématiquement des messages avec MA égal à 0 ou 2 conduisant au test de concordance multi-critères 38 et pour composer convenablement les champs d'adresse testés par le test 38 de manière que les ordres élaborés par le régulateur 2c soient pris en compte par les unités auxquelles ces ordres sont destinés.

L'interrupteur général 2g émet des ordres avec le code AM égal à 0 ou 2 et tous les champs explorés par le test 38 à la valeur 0.

Un programmateur tel que 2p émet systématiquement des ordres codés AM = 3 avec, dans le champ AU-T l'adresse d'unité à laquelle les commandes de ce programmateur sont destinées.

Bien entendu, l'invention n'est pas limitée à l'exemple décrit et représenté.

On aurait pu par exemple tester la concordance sur l'adresse de réseau dans le test de concordance multi-critères. Dans ce cas, le code MA = 2 serait devenu inutile. Mais on se priverait ainsi de la possibilité de faire intervenir ce test dans les modes de traitement correspondant aux codes MA = 1 et MA = 3, sans bénéfice sur la longueur du message puisque deux bits demeureraient nécessaires pour le code de mode d'adressage MA.

On peut par contre prévoir trois bits pour le code MA de manière que celui-ci puisse prendre huit valeurs différentes correspondant à huit itinéraires de traitement différents dans le logiciel de recherche de correspondance dans l'unité réceptrice.

On aurait pu inverser les tests de zéro 46 et 47, de façon à d'abord tester si le type précis d'unité est égal à zéro et, dans l'affirmative, aller directement au test de zéro sur le type général d'unité TGU-T, qui ne serait donc pas court-circuité. Si la composante de type précis d'unité est différente de zéro, on fait le test de concordance sur le type précis d'unité, à partir duquel on va directement à la sortie J ou à la sortie K selon que le résultat à ce test de concordance est positif ou négatif, en court-circuitant dans un cas comme dans l'autre le test de zéro et le test de concordance sur la composante du type général d'unité TGU-T. Ceci n'est possible que si les composantes d'adresse TPU-T définissant des sous-ensembles dans chaque ensemble défini par une valeur de TGU-T, sont différentes d'un ensemble TGU-T à l'autre, de façon qu'une composante TPU-T donnée définisse implicitement l'ensemble TGU-T auquel elle est rattachée.

La possibilité de donner une valeur particulière à une composante d'adressage d'un message pour provoquer l'omission du test de concordance portant sur cette composante n'est pas limitée aux composantes testées dans un test multi-critères tel que 38. En référence à la figure 5, on pourrait par exemple n'effectuer le test 32 portant sur l'adresse d'unité ou le test 34 portant sur l'adresse de réseau que si la composante d'adresse correspondante dans le message est différente de zéro. On pourrait ainsi de manière très simple adresser un message à toutes les unités d'un réseau en faisant MA = 3 et AU-T = 0. Dans ce cas, tous les champs d'adresse normalement destinés aux composantes testées dans le test multi-critères 38 seraient disponibles pour transmettre de l'information étrangère à l'adressage.

Il est encore possible qu'une unité fonctionnelle comporte plusieurs ressources locales gérées par un micro-contrôleur commun. En pratique, il peut s'agir de plusieurs fonctions d'un même appareil.

Dans ce cas, il est prévu selon l'invention que l'unité fonctionnelle ait plusieurs adresses locales, une pour chaque ressource locale. Les adresses des différentes ressources locales d'une même unité ne diffèrent entre elles que par une composante ou quelques composantes. Si les ressources locales d'une même unité sont fonctionnellement identiques, par exemple si l'unité consiste en une série de relais, leurs adresses ne diffèrent entre elles que par la composante d'adresse d'unité AU-L. Si au contraire les ressources locales de l'unité sont fonctionnellement différentes, par exemple s'il s'agit de la résistance chauffante et de l'horloge d'un appareil de cuisson, leurs adresses diffèrent en outre, dans l'exemple des figures 3 et suivantes, par la composante de groupe AG-L, la composante de type général d'unité TGU-L, et la composante de type particulier d'unité TPU-L.

Le logiciel du micro-contrôleur gérant une telle unité fonctionnelle est particulier en ce que , pour chaque champ d'adressage pour lequel les ressources de l'unité ont des composantes d'adresse différentes, il y a plusieurs tests pour comparer l'adresse du message transmis avec chaque adresse locale. Pour chacun de ces tests, le résultat de non-concordance conduit au test suivant sur la même composante, sauf pour le dernier qui conduit à la décision 33 de non considération du message. Si un de ces tests donne un résultat de concordance, il conduit après passage éventuel par les tests portant sur d'autres composantes, à une sortie de prise en compte du message pour la ressource locale dont l'adresse est concordante avec celle du message.

## Revendications

1. Procédé d'échange d'informations entre des unités fonctionnelles (1, 2), en particulier dans des locaux domestiques ou professionnels, communiquant entre elles à travers un espace de communication (4), dans lequel chaque message émis à partir d'une des unités contient une adresse à laquelle est associée au moins un code (MA, AG-T) relatif au mode de recherche de concordance, et certaines au moins des autres unités, ayant chacune au moins une adresse locale à composantes multiples (AR-L, AG-L, ...) constituant des éléments de définition de l'unité et/ou de sa situation, recherchent s'il y a une concordance convenable entre l'adresse du message et leur adresse locale et prennent en compte le message en cas de concordance, caractérisé en ce que lesdites autres unités utilisent le code comme un code de sélection de critères pour déterminer quelle(s) composante(s) de leur adresse locale et composante(s) correspondantes de l'adresse (AR-T, AG-T, ...) du message doivent être comparées pour rechercher la concordance, et respectivement doi(ven)t être laissée(s) hors comparaison, de façon que le message soit pris en compte par les unités d'une famille cible correspondant à l'intersection des ensembles d'unités définis par les composantes prises en compte dans l'adresse du message.

2. Procédé selon la revendication 1, caractérisé en ce qu'on utilise comme code de sélection de critères une valeur particulière de l'une des composantes (AG-T, AZ-T, ...) de l'adresse contenue dans le message, et en ce que lesdites autres unités, lorsqu'elles détectent cette valeur particulière, prennent une décision de concordance pour ladite composante d'adresse, indépendamment du contenu de cette composante dans l'adresse locale, laquelle est laissée hors comparaison.

3. Procédé selon la revendication 2, caractérisé en ce que lesdites autres unités, lorsqu'elles détectent la valeur particulière, prennent en outre une décision de concordance, pour au moins une autre composante d'adresse (APP-T, TPU-T), laquelle est laissée hors comparaison.

4. Procédé selon l'une des revendications 2 ou 3, caractérisé en ce qu'on donne à une unité une composante d'adresse égale à la valeur particulière.

5. Procédé selon l'une des revendications 1 à 4, caractérisé en ce qu'on utilise comme code de sélection de critères une composante d'adresse (MA) d'après laquelle lesdites autres unités sélectionnent un mode de traitement de la recherche de concordance parmi plusieurs modes possibles.

6. Procédé selon l'une des revendications 1 à 5, caractérisé en ce qu'on donne aux adresses locales des unités au moins une composante de localisation (AR-L, AZ-L, AGP-L, APP-L).

7. Procédé selon l'une des revendications 1 à 6, caractérisé en ce que par rapport à une première et une deuxième composante d'adresse, certaines unités ayant même première composante d'adresse (AGP-L) ont des deuxièmes composantes d'adresse différentes (TGU-L), et certaines unités ayant même deuxième composante d'adresse ont des premières composantes d'adresse différentes.

8. Procédé selon l'une des revendications 1 à 7, caractérisé en ce qu'on définit parmi les cibles au moins un ensemble défini par une première composante d'adresse spécifique (AGP-L, TGU-L) et incluant plusieurs sous-ensembles ayant chacun une deuxième composante d'adresse (APP-L, TPU-L), en ce que la recherche de concordance porte sur la première composante d'adresse et omet le test sur la deuxième composante d'adresse lorsqu'un message est destiné à toutes les cibles de l'ensemble, et en ce que la recherche de concordance porte sur les deux composantes d'adresse lorsqu'un message est destiné à un sous-ensemble.

9. Procédé selon l'une des revendications 1 à 7, caractérisé en ce qu'on définit parmi les cibles plusieurs ensembles disjoints définis par une première composante d'adresse spécifique (AGP-L, TGU-L) et incluant dans certains au moins de ces ensembles plusieurs sous-ensembles ayant chacun une deuxième composante d'adresse (APP-L, TPU-L), en ce que la recherche de concordance porte sur la première composante d'adresse et omet le test sur la deuxième composante d'adresse lorsqu'un message est destiné à toutes les cibles de l'un des ensembles, et en ce que la recherche de concordance porte sur les deux composantes d'adresse lorsqu'un message est destiné à un sous-ensemble.

10. Procédé selon l'une des revendications 1 à 7, caractérisé en ce qu'on forme dans un ensemble d'unités fonctionnelles ayant toutes une même première composante d'adresse (AGP-L, TGU-L), au moins un sous-ensemble comprenant moins d'unités fonctionnelles que l'ensemble et ayant une même deuxième composante d'adresse (APP-L, TPU-L), différente de celle de toutes les autres unités d'un réseau auquel appartiennent les unités de l'ensemble et d'autres unités ayant une première composante d'adresse différente.

11. Procédé selon l'une des revendications 1 à 10, caractérisé en ce que dans le message émis, on place des données étrangères à l'adresse des unités destinataires dans les champs d'adressage qui d'après le code de sélection de critère (MA) ne seront pas pris en compte par les autres unités pour la recherche de concordance.

12. Procédé selon la revendication 11, caractérisé en ce que les données étrangères à l'adresse des unités destinataires sont des composantes d'adresse de l'unité émettrice du message.

13. Procédé selon l'une des revendications 1 à 12, caractérisé en ce qu'à la réception d'un message, l'unité fonctionnelle compare une composante d'adresse du message avec plusieurs composantes d'adresse correspondantes associées à plusieurs ressources locales de l'unité fonctionnelle et en cas de concordance avec l'une desdites composantes d'adresse correpondantes on autorise la prise en compte du message pour la ressource locale associée, sous réserve de la suite éventuelle de la recherche de correspondance.

14. Unité fonctionnelle pour la mise en oeuvre du procédé selon l'une des revendications 1 à 13, comprenant des moyens (24) pour être reliée à un espace de communication (4) et des moyens (21) pour rechercher une concordance entre une adresse des messages reçus et au moins une adresse locale de l'unité, ces adresses comprenant des composantes constituant des éléments de définition de l'unité concernée et de sa situation, caractérisée en ce que les moyens pour rechercher une concordance comprennent des moyens (31, 37, 39, 41-44, 46, 47) pour détecter dans le message reçu un code de sélection de critères et pour sélectionner d'après ce code un mode de recherche de concordance parmi plusieurs modes de recherche possibles se distinguant par le choix des composantes sur lesquelles porte la recherche de concordance et de celle(s) qui, au moins pour une valeur du code de sélection de critères, est (sont) écartée(s) de la recherche de concordance, de manière que l'unité ne prenne en compte chaque message que lorsqu'elle appartient à une famille-cible correspondant à l'intersection des ensembles d'unités définis par les composantes de l'adresse du message sur lesquelles a porté la recherche de correspondance.

15. Installation comprenant des unités fonctionnelles (1, 2) reliées entre elles par un espace de communication (4), caractérisée en ce que certaines au moins des unités fonctionnelles sont conformes à la revendication 14.

## Claims

1. Process for the exchange of information between functional units (1, 2), in particular in domestic or business premises, communicating with each other through a communications space (4), in which each message transmitted from one of the units contains an address with which a code (AM, GA-T) is associated relating to the match search mode, and at least some of the other units, each having at least one local address with multiple components (NA-L, GA-L, etc.) constituting elements which define the unit and/or its location, check whether there is an appropriate match between the message address and their local address and retrieve the message if there is a match, characterized in that said other units use the code as a criteria selection code in order to determine which component(s) of their local address and corresponding message address component(s) (NA-T, GA-T, etc.) must be compared in searching for a match, and respectively must be excluded from the comparison, such that the message is retrieved by the units of a target family corresponding to the intersection of the sets of units defined by the components retrieved in the message address.

2. Process according to claim 1, characterized in that, as the criteria selection code, a specific value of one of the components (GA-T, ZA-T, etc.) of the address contained in the message is used, and in that said other units, when they detect this specific value, make a match decision for said address component, independently of the content of this component in the local address, which is excluded from the comparison.

3. Process according to claim 2, characterized in that said other units, when they detect the specific value, also make a match decision for at least one other address component (SRA-T, SUT-T), which is excluded from the comparison.

4. Process according to one of claims 2 or 3, characterized in that an address component equal to the specific value is given to a unit.

5. Process according to one of claims 1 to 4, characterized in that, as criteria selection code, an address component (AM) is used according to which said other units select a processing mode for the match search from several possible modes.

6. Process according to one of claims 1 to 5, characterized in that at least one location component (NA-L, ZA-L, GRA-L, SRA-L) is assigned to the local unit addresses.

7. Process according to one of claims 1 to 6, characterized in that with respect to a first and second address component, certain units having the same first address component (GRA-L) have different second address components (GUT-L), and certain units having the same second address component have different first address components.

8. Process according to one of claims 1 to 7, characterized in that among the targets, at least one set is defined by a first specific address component (GRA-L, GUT-L) and includes several subsets each having a second address component (SRA-L, SUT-L), in that the match search relates to the first address component and omits the test on the second address component when a message is intended for all the targets of the set, and in that the match search relates to both address components when a message is intended for a subset.

9. Process according to one of claims 1 to 7, characterized in that several unconnected sets are defined among the targets by a first specific address component (GRA-L, GUT-L) and, in at least some of these sets, include several subsets each having a second address component (SRA-L, SUT-L), in that the match search relates to the first address component and omits the test on the second address component when a message is intended for all the targets of one of the sets, and in that the match search relates to both address components when a message is intended for a subset.

10. Process according to one of claims 1 to 7, characterized in that, in a set of functional units which all have the same first address component (GRA-L, GUT-L), at least one subset is formed comprising less functional units than the set and having the same second address component (SRA-L, SUT-L), different from that of all the other units of a network to which the set's units and other units having a different first address component belong.

11. Process according to one of claims 1 to 10, characterized in that, in the message transmitted, data which is unrelated to the recipient units' addresses is inserted in the address fields which, according to the criteria selection code (AM), will not be retrieved by the other units for the match search.

12. Process according to claim 11, characterized in that the data unrelated to the recipient units' addresses comprises components of the message transmitter unit's address.

13. Process according to one of claims 1 to 12, characterized in that, on reception of a message, the functional unit compares a message address component with several corresponding address components associated with several local resources of the functional unit and, if there is a match with one of said corresponding address components, retrieval of the message for the associated local resource is authorized, subject to the optional continuation of the match search.

14. Functional unit for the implementation of the process according to one of claims 1 to 13, comprising means (24) for connection to a communications space (4) and means (21) for searching for a match between an address in the messages received and at least one local address of the unit, these addresses comprising components constituting elements which define the unit concerned and its location, characterized in that the means for searching for a match comprise means (31, 37, 39, 41-44, 46, 47) for detecting a criteria selection code in the message received and for selecting, according to this code, a match search mode from several possible search modes which are differentiated by the choice of the components to which the match search applies and that (those) which, at least for one value of the criteria selection code, is (are) excluded from the match search, such that the unit only retrieves each message when it belongs to a target family corresponding to the intersection of the sets of units defined by the components of the address of the message to which the match search related.

15. Installation comprising functional units (1, 2) interconnected by a communications space (4), characterized in that at least some of the functional units conform with claim 14.

## Patentansprüche

1. Verfahren zum Informationsaustausch zwischen Funktionseinheiten (1, 2), insbesondere in Wohn- oder Geschäftsräumen, die miteinander über einen Kommunikationsraum (4) kommunizieren, in dem jede von einer der Einheiten ausgesandte Meldung eine Adresse enthält, mit der mindestens ein Code (MA, AG-T), der sich auf den Übereinstimmungssuchmodus bezieht, verbunden ist, und in dem zumindest manche der anderen Einheiten, die jeweils mindestens eine lokale Adresse mit zahlreichen Komponenten (AR-L, AG-L,...) aufweisen, die Elemente zur Definition der Einheit und/oder ihrer Situation darstellen, untersuchen, ob eine entsprechende Übereinstimmung zwischen der Adresse der Meldung und ihrer lokalen Adresse besteht und die Meldung im Falle einer Übereinstimmung berücksichtigen, dadurch gekennzeichnet, daß die anderen Einheiten den Code als einen Kriterienauswahlcode verwenden, um festzustellen, welche Komponente(n) ihrer lokalen Adresse und entsprechende(n) Komponente (n) der Adresse (AR-T, AG-T,...) der Meldung verglichen werden müssen, um die Übereinstimmung zu suchen bzw. aus dem Vergleich weggelassen werden müssen, so daß die Meldung von den Einheiten einer Zielgruppe berücksichtigt wird, die der Schnittstelle der Gruppen von Einheiten entspricht, die durch die in der Adresse der Meldung berücksichtigten Komponenten definiert werden.

2. Verfahren nach Anspruch 1, dadurch gekennzeichnet, daß als Kriterienauswahlcode ein besonderer Wert einer der Komponenten (AG-T, AZ-T, ...) der in der Meldung enthaltenen Adresse verwendet wird, und daß die anderen Einheiten, wenn sie diesen besonderen Wert erfassen, eine Entscheidung der Übereinstimmung für diese Adresskomponente treffen, unabhängig von dem Inhalt dieser Komponente in der lokalen Adresse, die aus dem Vergleich weggelassen wird.

3. Verfahren nach Anspruch 2, dadurch gekennzeichnet, daß die anderen Einheiten, wenn sie den besonderen Wert erfassen, ferner eine Entscheidung der Übereinstimmung für mindestens eine weitere Adresskomponente (APP-T, TPU-T), die aus dem Vergleich weggelassen wird, treffen.

4. Verfahren nach einem der Ansprüche 2 oder 3, dadurch gekennzeichnet, daß einer Einheit eine Adresskomponente verliehen wird, die gleich dem besonderen Wert ist.

5. Verfahren nach einem der Ansprüche 1 bis 4, dadurch gekennzeichnet, daß als Kriterienauswahlcode eine Adresskomponente (MA) verwendet wird, nach der die anderen Einheiten einen Bearbeitungsmodus für die Suche nach Übereinstimmung unter mehreren möglichen Modi auswählen.

6. Verfahren nach einem der Ansprüche 1 bis 5, dadurch gekennzeichnet, daß den lokalen Adressen der Einheiten mindestens eine Lokalisierungskomponente (AR-L, AZ-L, AGP-L, APP-L) verliehen wird.

7. Verfahren nach einem der Ansprüche 1 bis 6, dadurch gekennzeichnet, daß in bezug zu einer ersten und einer zweiten Adresskomponente manche Einheiten, die dieselbe erste Adresskomponente (AGP-L) aufweisen, unterschiedliche zweite Adresskomponenten (TGU-L) besitzen, und manche Einheiten, die dieselbe zweite Adresskomponente aufweisen, unterschiedliche erste Adresskomponenten besitzen.

8. Verfahren nach einem der Ansprüche 1 bis 7, dadurch gekennzeichnet, daß unter den Zielen mindestens eine Gruppe definiert wird, die durch eine erste spezielle Adresskomponente (AGP-L, TGU-L) definiert wird und mehrere Untergruppen einschließt, die jeweils eine zweite Adresskomponente (APP-L, TPU-L) aufweisen, daß sich die Suche nach Übereinstimmung auf die erste Adresskomponente bezieht und den Test über die zweite Adresskomponente wegläßt, wenn eine Meldung an alle Ziele der Gruppe gerichtet ist, und daß sich die Suche nach Übereinstimmung auf die beiden Adresskomponenten bezieht, wenn eine Meldung für eine Untergruppe bestimmt ist.

9. Verfahren nach einem der Ansprüche 1 bis 7, dadurch gekennzeichnet, daß unter den Zielen mehrere getrennte Gruppen definiert werden, die durch eine erste spezielle Adresskomponente (AGP-L, TGU-L) definiert werden und zumindest manche dieser Gruppen mehrere Untergruppen umfassen, die jeweils eine zweite Adresskomponente (APP-L, TPU-L) aufweisen, daß sich die Suche nach Übereinstimmung auf die erste Adresskomponente bezieht und den Test über die zweite Adresskomponente wegläßt, wenn eine Meldung an alle Ziele einer der Gruppen gerichtet ist, und daß sich die Suche nach Übereinstimmung auf die beiden Adresskomponenten bezieht, wenn eine Meldung an eine Untergruppe gerichtet ist.

10. Verfahren nach einem der Ansprüche 1 bis 7, dadurch gekennzeichnet, daß in einer Gruppe von Funktionseinheiten, die alle eine selbe erste Adresskomponente (AGP-L, TGU-L) aufweisen, mindestens eine Untergruppe gebildet wird, die weniger Funktionseinheiten als die Gruppe umfaßt und eine selbe zweite Adresskomponente (APP-L, TPU-L) aufweist, die sich von jener aller anderen Einheiten eines Netzes, dem die Einheiten der Gruppe angehören, und weitere Einheiten, die eine unterschiedliche erste Adresskomponente aufweisen, unterscheidet.

11. Verfahren nach einem der Ansprüche 1 bis 10, dadurch gekennzeichnet, daß in der ausgesandten Meldung für die Adresse der Empfangseinheiten fremde Daten in den Adressierfeldern angeordnet werden, die nach dem Kriterienauswahlcode (MA) von den anderen Einheiten für die Suche nach Übereinstimmung nicht berücksichtigt werden.

12. Verfahren nach Anspruch 11, dadurch gekennzeichnet, daß die für die Adresse der Empfangseinheiten fremden Daten Adresskomponenten der Einheit sind, die die Meldung aussendet.

13. Verfahren nach einem der Ansprüche 1 bis 12, dadurch gekennzeichnet, daß beim Erhalt einer Meldung die Funktionseinheit eine Adresskomponente der Meldung mit mehreren entsprechenden Adresskomponenten vergleicht, die mit mehreren lokalen Quellen der Funktionseinheit verbunden sind, und daß im Falle der Übereinstimmung mit einer der entsprechenden Adresskomponenten die Berücksichtigung der Meldung für die zugehörige lokale Quelle genehmigt wird, vorbehaltlich der möglichen Fortsetzung der Suche nach Entsprechung.

14. Funktionseinheit für den Einsatz des Verfahrens nach einem der Ansprüche 1 bis 13, bestehend aus Mitteln (24) für die Verbindung mit einem Kommunikationsraum (4) und Mitteln (21) für die Suche nach einer Übereinstimmung zwischen einer Adresse der erhaltenen Meldungen und mindestens einer lokalen Adresse der Einheit, wobei diese Adressen Komponenten umfassen, die Elemente zur Definition der betreffenden Einheit und ihrer Situation umfassen, dadurch gekennzeichnet, daß die Mittel zur Suche einer Übereinstimmung Mittel (31, 37, 39, 41-44, 46, 47) umfassen, um in der erhaltenen Meldung einen Kriterienauswahlcode zu erfassen und um nach diesem Code einen Modus für die Suche nach Übereinstimmung unter mehreren möglichen Suchmodi auszuwählen, die sich durch die Wahl der Komponenten, auf die sich die Suche nach Übereinstimmung bezieht und von der (denen), die zumindest für einen Wert des Kriterienauswahlcodes von der Suche nach Übereinstimmung ausgeschlossen ist (sind), unterscheiden, so daß die Einheit nur dann jede Meldung berücksichtigt, wenn sie einer Zielgruppe angehört, die der Schnittstelle der Gruppen von Einheiten entspricht, die durch die Komponenten der Adresse der Meldung, auf die sich die Suche nach Übereinstimmung bezieht, definiert sind.

15. Anlage, bestehend aus Funktionseinheiten (1, 2), die miteinander durch einen Kommunikationsraum (4) verbunden sind, dadurch gekennzeichnet, daß zumindest manche der Funktionseinheiten dem Anspruch 14 entsprechen.
